# EUROPÄISCHE PATENTANMELDUNG

(11) **EP 4 406 734 A1**
(43) Veröffentlichungstag der Anmeldung: **31.07.2024**
(21) Anmeldenummer: 23153762.2
(22) Anmeldetag: 27.01.2023
(51) Int. Cl.: B31B 70/00, B65D 30/20, B65D 33/00, B29C 65/02, B29C 65/00

(54) **SEITENFALTENVERPACKUNGSBEUTEL UND VERFAHREN ZUR HERSTELLUNG EINES SEITENFALTENVERPACKUNGSBEUTELS**

(71) Anmelder: Mondi AG, 1030 Wien (AT)
(72) Erfinder: Kösters, Jens, 49134 Wallenhorst (DE)
(74) Vertreter: Andrejewski - Honke Patent- und Rechtsanwälte Partnerschaft mbB

(57) **Zusammenfassung**

Die Erfindung betrifft einen Seitenfaltenverpackungsbeutel mit einem von einer ersten Frontwand (1a), einer zweiten Frontwand (1b), einer ersten Seitenfalte (2a) und einer zweiten Seitenfalte (2b) gebildeten Beutelkörper aus einer Beutelfolie, wobei die erste Seitenfalte (2a) an einer ersten Beutelecke (4a) mit einem ersten Flügel (6a) an die erste Frontwand (1a) und an einer zweiten Beutelecke (4b) mit einem zweiten Flügel (6b) an die zweite Frontwand (1b) anschließt, wobei die zweite Seitenfalte (2b) an einer dritten Beutelecke (4c) mit einem dritten Flügel (6c) an die zweite Frontwand (1b) und an einer vierten Beutelecke (4d) mit einem vierten Flügel (6d) an die erste Frontwand (1a) anschließt und wobei die erste Frontwand (1a) und der erste Flügel (6a) an der ersten Beutelecke (4a) über eine Längssiegelnaht (7) in Form einer Verschlussnaht miteinander verbunden sind. Erfindungsgemäß ist vorgesehen, dass die zweite Frontwand (1b) an der zweiten Beutelecke (4b) lediglich über eine Knicklinie (5') an den zweiten Flügel (6b) anschließt.

## Beschreibung

Die Erfindung betrifft einen Seitenfaltenverpackungsbeutel mit einem von einer ersten Frontwand, einer zweiten Frontwand, einer ersten Seitenfalte und einer zweiten Seitenfalte gebildeten Beutelkörper aus einer Beutelfolie, wobei die erste Seitenfalte an einer ersten Beutelecke mit einem ersten Flügel an die erste Frontwand und an einer zweiten Beutelecke mit einem zweiten Flügel an die zweite Frontwand anschließt, wobei die zweite Seitenfalte an einer dritten Beutelecke mit einem dritten Flügel an die zweite Frontwand und an einer vierten Beutelecke mit einem vierten Flügel an die erste Frontwand anschließt und wobei die erste Frontwand und der erste Flügel an der ersten Beutelecke über eine Längsnaht in Form einer Verschlussnaht miteinander verbunden sind.

Im Rahmen der Erfindung kann der Seitenfaltenverpackungsbeutel für verschiedene, vorzugsweise körnige oder pulverförmige Schüttgüter eingesetzt werden. Der Seitenfaltenverpackungsbeutel kann beispielsweise für Gebinde von Lebensmittel wie Reis, mehreren Zucker, pelletierte Tiernahrung oder auch verschiedene Bauprodukte wie Sand, Mörtel, Beton, Fliesenkleber, zementhaltige Putz- und Ausgleichsmassen für Wände und Böden oder dergleichen vorgesehen sein. Der Seitenfaltenverpackungsbeutel kann jedoch auch für andere pulverförmige oder körnige Füllgüter aus dem Bereich der Chemie sowie der Lebens- und Futtermittel vorgesehen sein. Das Füllgutgewicht kann beispielsweise zwischen 1 kg und 25 kg und das Volumen der verschlossenen Beutelkörper zwischen 2,5 l (Liter) und 40 l liegen.

In dem befüllten und verschlossenen Seitenfaltenverpackungsbeutel ist das Füllgut weitgehend gegen Umwelteinflüsse geschützt und kann somit über einen längeren Zeitraum gelagert werden. Der verschlossene Seitenfaltenverpackungsbeutel kann je nach Anforderungen jedoch auch ein Ventil, zumindest eine Entlüftungsöffnung oder dergleichen aufweisen, wenn beispielsweise bei der Lagerung des Füllgutes entstehende Gase abzuführen sind oder ein Druckausgleich notwendig ist.

In üblicher Weise kann der Seitenfaltenverpackungsbeutel mit einem Standboden, leistenförmigen Verschlusselementen für einen Wiederverschluss oder anderen Einrichtungen ausgestaltet sein.

Der Seitenfaltenverpackungsbeutel wird vorzugsweise zunächst als Beutelrohling gefertigt, welcher dann im flachliegenden Zustand mit zwischen den Frontwänden eingelegten Seitenfalten gelagert, transportiert und gehandhabt werden kann, um erst nachfolgend - um üblicherweise an einer anderen Produktionsstelle - befüllt und verschlossen zu werden.

Seitenfaltenverpackungsbeutel der beschriebenen Art werden industriell mit großen Stückzahlen gefertigt, sodass eine schnelle Produktionsgeschwindigkeit, ein geringer Fertigungsaufwand und insbesondere ein effizienter Einsatz von Material und Energie von besonderer Bedeutung sind. Für die Ausformung des Beutelkörpers ist insbesondere ein sogenanntes Längsverfahren geeignet, bei welchem die einzelnen Seitenfaltenverpackungsbeutel aus einem in einer Produktionsrichtung verlaufenden, aus einer Bahn der Beutelfolie gebildeten Seitenfaltenschlauch erzeugt werden.

Aus ökologischer und ökonomischer Sicht ist auch eine gute Recyclingfähigkeit anzustreben, um im Rahmen eines Recyclings hochwertige Produkte und insbesondere hochwertige Recyclate bilden zu können. Die Recyclingfähigkeit wird beispielsweise von dem Institut cyclos-HTP GmbH bewertet, wozu auch ein entsprechendes Label vergeben wird.

In der Praxis weit verbreitete Seitenfaltenverpackungsbeutel weisen eine kaschierte Beutelfolie auf, die eine Außenfolie aus Polyethylenterephthalat (PET) und eine heißsiegelbare Innenfolie aus Polyethylen (PE) umfasst. Bei einer solchen beispielsweise aus der EP 2 186 741 bekannten Ausführung ergibt sich jedoch der Nachteil, dass ein sortenreines Recycling des Seitenfaltenverpackungsbeutels nicht oder allenfalls mit einem sehr erheblichen Aufwand möglich ist.

Ein gattungsgemäßer Seitenfaltenverpackungsbeutel mit einem sortenreinen Beutelkörper ist aus der EP 2 987 744 B1 bekannt. Die den Beutelkörper bildende Beutelfolie ist ein Laminat aus einer in Produktionsrichtung monoaxial orientierten Außenfolie und einer keine Orientierung aufweisenden Innenfolie. Insbesondere durch die Orientierung werden die Siegeleigenschaften der Außenfolie so verändert, dass bei der Produktion des Seitenfaltenverpackungsbeutels unter Bildung eines Seitenfaltenschlauches mit zwei Frontwänden und dazwischen eingelegten Seitenfalten an Beutelecken bei einem Heißsiegeln mit einer Heißsiegeleinrichtung lediglich die Innenfolie, jedoch nicht die ebenfalls im Bereich der Seitenfalten auf sich selbst aufliegende Außenfolie jeweils mit sich selbst verschweißt wird. Somit wird ein hochwertiger sortenreiner Seitenfaltenverpackungsbeutel bereitgestellt, der sich durch eine sehr gute Recyclingfähigkeit auszeichnet.

Der vorliegenden Erfindung liegt die Aufgabe zugrunde, einen Seitenfaltenverpackungsbeutel anzugeben, welcher besonders einfach und kostengünstig gefertigt werden kann. Des Weiteren soll ein Verfahren zur Herstellung eines solchen Seitenfaltenverpackungsbeutels angegeben werden.

Gegenstand der Erfindung und Lösung der Aufgabe ist ein Seitenfaltenverpackungsbeutel gemäß Patentanspruch 1 sowie ein Verfahren zur Herstellung eines Seitenfaltenverpackungsbeutels gemäß Patentanspruch 14.

Ausgehend von einem gattungsgemäßen Seitenfaltenverpackungsbeutel ist demnach vorgesehen, dass die zweite Frontwand an der zweiten Beutelecke lediglich über eine Knicklinie an den zweiten Flügel anschließt, dort also keine Längssiegelnaht vorhanden ist.

Während bei einem aus der EP 2 987 744 B1 bekannten gattungsgemäßen Seitenfaltenverpackungsbeutel an den Beutelecken fertigungsbedingt Längssiegelnähte vorhanden sind, lehrt die vorliegende Erfindung eine demgegenüber abweichende, asymmetrische Ausgestaltung, wozu - wie nachfolgend beschrieben - unterschiedliche Maßnahmen bei der Herstellung vorgesehen sein können.

Gemäß einer bevorzugten Ausgestaltung der Erfindung ist vorgesehen, dass der Seitenfaltenverpackungsbeutel sortenrein gebildet ist und insbesondere aus einem Polyolefin, besonders bevorzugt Polyethylen (PE), besteht.

Als sortenrein wird in diesem Zusammenhang insbesondere verstanden, wenn der gesamte Beutelkörper aus Kunststoff einer Polymerklasse wie beispielsweise Polyethylen oder Polypropylen gebildet ist. Dabei ist zu berücksichtigen, dass die Beutelfolie grundsätzlich auch mehrschichtig gebildet sein kann und der Seitenfaltenverpackungsbeutel optional auch Funktionselemente wie Ausgießer, Wiederverschlüsse, Ventile oder dergleichen aufweisen kann. Auch diese sind dann zweckmäßigerweise sortenrein mit der Beutelfolie.

Wenn also gemäß der beschriebenen bevorzugten Ausgestaltung der Seitenfaltenverpackungsbeutel sortenrein aus Polyethylen oder sortenrein aus Polypropylen gebildet ist, können einzelne Schichten der Beutelfolie und/oder weitere Funktionselemente mit einer unterschiedlichen Dichte wie beispielsweise ULDPE, LDPE, LLDPE, MDPE, LLMDPE und HDPE vorliegen. Grundsätzlich können die verschiedenen Dichteklassen auch gemeinsam gesammelt und recycelt werden, wobei ein solches Gemisch selbstverständlich Materialeigenschaften aufweist, die von den einzelnen verschiedenen Ausgangskunststoffen abweichen.

Vor diesem Hintergrund kann der Beutelkörper auch in einem engeren Sinne sortenrein gebildet werden, wobei dann Materialien aus einem relativ engen Dichtebereich vorgesehen sind.

Gerade im Hinblick auf Polyethylen kann eine Unterscheidung zwischen Polyethylen hoher Dichte (HDPE) und Polyethylen niedriger Dichte (LDPE) zweckmäßig sein, weil sich daraus gemäß Anlage 5 des Deutschen Verpackungsgesetzes vom 5. Juni 2017 (Gesetz zur Fortentwicklung der haushaltsnahen Getrennterfassung von wertstoffhaltigen Abfällen) unterschiedliche Abkürzungen und Nummern (HDPE, Nr. 2 und LDPE, Nr. 4) ergeben.

Auch wenn gemäß der üblichen Kriterien die Beutelfolie und bevorzugt der gesamte Seitenfaltenverpackungsbeutel als sortenrein klassifiziert wird, können übliche Zusatz- und Füllstoffe vorgesehen sein. Hierzu zählen beispielsweise Pigmente, Farbstoffe, Verarbeitungshilfsmittel, UV-Stabilisatoren, anorganische Füllstoffe und dergleichen. Der Gewichtsanteil entsprechender Zusatz- und Füllstoffe liegt vorzugsweise bei weniger als 10 Gew-% und besonders bevorzugt weniger als 5 Gew.-% bezogen auf das Gesamtgewicht der Beutelfolie bzw. des Seitenfaltenverpackungsbeutels, wobei dann der Rest von dem sortenreinen Polymer selbst gebildet ist.

Vorzugsweise ist vorgesehen, dass die Beutelfolie an einer ersten Seite, welche eine Außenseite des Verpackungsbeutels bildet, und an einer zweiten Seite, welche eine Innenseite des Verpackungsbeutels bildet, aus dem gleichen Polymer gebildet ist und an beiden Seiten auch gleiche oder im Wesentlichen gleiche Siegeleigenschaften aufweist. Die erste Seite und die zweite Seite können insbesondere durch Extrusion materialeinheitlich gebildet sein.

Dieses Kriterium ist selbstverständlich erfüllt, wenn die Beutelfolie insgesamt einsichtig als Monofolie extrudiert wird. Eine Mono-Struktur kann auch dadurch erreicht werden, dass ein einsichtiger Blasfolienschlauch extrudiert und dann zu der Beutelfolie verblockt wird, sodass dann die Beutelfolie gegenüber der Wandstärke des Blasfolienschlauchs eine doppelte Dicke aufweist.

Auch wenn gemäß einer Variante der Erfindung ein zumindest zweischichtiger Blasfolienschlauch verblockt wird, sind die erste Seite und die zweite Seite der Beutelfolie durch Extrusion materialeinheitlich gebildet. Die dann in einem symmetrischen dreischichtigen Aufbau innenliegende verblockte Kernschicht kann beispielsweise auch aus einem Recyclat einschließlich eines Post-Consumer-Recyclates (PCR) gebildet sein, wobei durch die Abdeckung der Kernschicht nach innen und außen auch gewisse Nachteile hinsichtlich der mechanischen Eigenschaften und/oder Reinheit hingenommen werden können.

Im Rahmen der Erfindung ist die Beutelfolie bevorzugt als Extrusionsfolie gebildet. Die Beutelfolie wird dann in einem einzigen Extrusions- bzw. Coextrusionsprozess gefertigt. Eine Kaschierung sowie eine separate Fertigung von Teilfolien sind dann nicht vorgesehen, wodurch sich eine einfache Herstellung und geringe Kosten ergeben.

Die Frontwände und die Seitenfalten sind bevorzugt gemeinsam durch Falten und Siegeln einer Bahn der Beutelfolie gebildet. An der ersten Beutelecke ist dann durch die Längssiegelnaht in Form der Verschlussnaht ein umfangseitiger Verschluss vorgesehen, während erfindungsgemäß zumindest an der zweiten Beutelecke keine Längssiegelnaht sondern lediglich eine Knicklinie an dem Übergang von dem zweiten Flügel zu der zweiten Frontwand vorliegt.

An der zweiten Seitenfalte befinden sich die die dritte Beutelecke und die vierte Beutelecke, welche je nach Herstellungsverfahren unterschiedlich ausgeführt sein können. Insbesondere kann im Rahmen der Erfindung vorgesehen sein, dass lediglich die erste Beutelecke mit der Längssiegelnaht versehen ist, während dann an allen übrigen Beutelecken lediglich Knicklinien vorgesehen sind. Wie nachfolgend noch weiter erläutert, können Längssiegelnähte auch an der ersten Beutelecke und der vierten Beutelecke oder alternativ auch an der ersten Beutelecke und der dritten Beutelecke vorgesehen sein, wobei dann die jeweils verbleibenden Beutelecken lediglich eine Knicklinie aufweisen.

In diesem Zusammenhang kann beispielsweise vorgesehen sein, dass in einem flachliegenden Zustand mit zwischen den Frontwänden eingefalteten Seitenfalten die Längssiegelnaht an der erste Beutelecke neben, also außerhalb der zweiten Frontwand angeordnet ist. Mit einem Siegelwerkzeug, beispielsweise beheizten Siegelbacken, kann dann gezielt lediglich an der ersten Beutelecke eine Längssiegelnaht erzeugt werden. Die Erfindung lehrt in diesem Zusammenhang also im gewissen Maße eine asymmetrische Fertigung.

Die Seitenfalten weisen jeweils zwei über eine Knicklinie aneinander anschließende Flügel auf. Insgesamt sind also vier Flügel vorhanden, wobei ein erster Flügel und ein zweiter Flügel der ersten Seitenfalte und ein dritter und ein vierter Flügel der zweiten Seitenfalte zugeordnet sind.

Um wie zuvor beschrieben an der ersten Beutelecke die Längssiegelnaht neben der zweiten Frontwand erzeugen zu können, kann die erste Frontwand eine größere Breite als die zweite Frontwand aufweisen. Entsprechend ist auch der erste Flügel mit einer größeren Breite vorzusehen, damit dieser sich bis zu dem Rand der ersten Frontwand erstreckt.

Ohne weiteres ist es möglich, dass sich die erste Frontwand lediglich im Bereich der ersten Beutelecke über die zweite Frontwand hinaus erstreckt, wobei dann an der gegenüberliegenden Seite der ersten Frontwand die vierte Beutelecke genau über der dritten Beutelecke liegt und dann dort lediglich Knicklinien vorhanden sind.

Alternativ kann sich die erste Frontwand auch im Bereich der vierten Beutelecke über die zweite Frontwand hinaus erstrecken, sodass dann auch an der vierten Beutelecke eine Längssiegelnaht auf einfache Weise erzeugt werden kann. Diese Längssiegelnaht ist zwar nicht als Verschlussnaht erforderlich, kann jedoch aus optischen oder funktionellen Gründen zweckmäßig sein, beispielsweise um die Stabilität des Seitenfaltenverpackungsbeutels zu erhöhen.

Gemäß einem alternativen Ansatz können die Frontwände in dem flachliegenden Zustand auch zueinander versetzt sein, sodass auch dann bei einer gleichen Breite der Frontwände die Längssiegelnaht an der ersten Beutelecke neben, also außerhalb der zweiten Frontwand angeordnet ist. Bei einem solchen Versatz steht dann an der gegenüberliegenden Seite der zweiten Frontwand die dritte Beutelecke gegenüber der ersten Frontwand seitlich vor, sodass dann an der dritten Beutelecke wahlweise nur eine Knicklinie vorgesehen ist oder auch eine Längssiegelnaht erzeugt werden kann. Der beschriebene Versatz der beiden Frontwände kann dadurch erreicht werden, dass der erste und der dritte Flügel eine größere Breite als der zweite und der vierte Flügel aufweisen.

Der durch eine größere Breite der ersten Frontwand und/oder ein Versatz erzeugte Überstand liegt vorzugsweise in einem Bereich zwischen 5 mm und 20 mm, insbesondere zwischen 7 mm und 15 mm.

Der Seitenfaltenverpackungsbeutel weist üblicherweise eine teilflächige oder vollflächige Bedruckung auf, wobei insbesondere ein Dekor und/oder Produktinformationen vorgesehen sein können. Da die Beutelfolie bevorzugt vollständig als Extrusionsfolie durch Extrusion bzw. Coextrusion gebildet ist, erfolgt die Bedruckung üblicherweise an der die Außenseite des Beutelkörpers bildenden ersten Seite der Beutelfolie in einem Schöndruck. Wenn die Beutelfolie durchsichtig ist, kommt grundsätzlich auch eine Bedruckung an der zweiten Seite der Beutelfolie in Betracht, wobei dann der Aufdruck jedoch in einem direkten Kontakt mit dem Füllgut steht, was in vielen Fällen nachteilig sein kann.

Der auf die Beutelfolie aufgebrachte Aufdruck kann insbesondere auch mit einem Schutzlack versehen sein.

Gemäß einer Weiterbildung der Erfindung können auch Druckfarben und Lacke vorgesehen sein, welche beispielsweise durch Wasser oder ein geeignetes Lösungsmittel abwaschbar sind. Zweckmäßigerweise sind Druckfarben und Lacke dann jedoch so ausgewählt, dass diese erst bei einem Recyclingprozess entfernt werden und sich nicht bereits bei der üblichen Handhabung des Seitenfaltenverpackungsbeutels lösen können. Diese Maßgabe kann beispielsweise dadurch erreicht werden, dass eine Entfernung nur durch ein bestimmtes Lösungsmittel und/oder eine gewisse Einwirkzeit möglich ist.

Insbesondere wenn die Beutelfolie gemäß einer bevorzugten Ausgestaltung der Erfindung sortenrein aus Polyolefin und besonders bevorzugt aus Polyethylen gebildet ist, liegt die Dicke der Beutelfolie typischerweise in einem Bereich zwischen 80 µm und 250 µm, insbesondere zwischen 120 µm und 200 µm.

Erfindungsgemäß sind sowohl mindestens eine Beutelecke mit einer Längssiegelnaht und mindestens eine Beutelecke ohne eine Längssiegelnaht vorhanden.

Die zumindest eine Längssiegelnaht bewirkt in an sich bekannter Weise eine Verstärkung des Beutelkörpers. Bereits mit lediglich einer Längssiegelnaht wird im Vergleich zu Knicklinien an allen vier Beutelecken eine erhebliche Verbesserung der Stabilität erreicht. Dabei wird hingenommen, dass die in die entsprechende Längssiegelnaht eingebundenen Abschnitte der Folie nicht zu der Ausbildung des Innenraums des Beutelkörpers beitragen können. Gewissermaßen weist der Beutelkörper im Bereich der zumindest einen Längssiegelnaht innen und außen unterschiedliche Abmessungen auf.

Andererseits ist zumindest an einer der Beutelecken keine Längssiegelnaht vorhanden, wobei dann dort der Innenraum des Beutelkörpers nicht wie zuvor beschrieben reduziert ist und sich bezogen auf das eingesetzte Material eine effiziente Ausnutzung ergibt. Im Rahmen der Erfindung kann also in Kombination eine hinreichende Stabilität bei einer guten Materialausnutzung erreicht werden.

Die Anordnung mindestens einer Beutelecke mit einer Längssiegelnaht und mindestens einer Beutelecke ohne eine Längssiegelnaht kann auch bei der optischen Gestaltung des Seitenfaltenverpackungsbeutels von Vorteil sein. Wenn beispielsweise eine der beiden Frontwände durch Längssiegelnähte begrenzt ist, so kann diese eine Vorderseite mit einem hochwertigen Dekoraufdruck bilden. Durch die Längssiegelnähte ist diese Vorderseite dann besonders stabilisiert und vergleichsweise eben und glatt.

Gegenstand der Erfindung ist auch ein Verfahren zur Herstellung des zuvor beschriebenen Seitenfaltenverpackungsbeutels, wobei nacheinander erstens eine Beutelfolie sortenrein in einem Extrusionsprozess gebildet wird, zweitens eine Bahn der Beutelfolie derart zu einem Seitenfaltenschlauch mit einer ersten Frontwand, einer zweiten Frontwand, einer ersten zwischen den Frontwänden eingefalteten Seitenfalte und einer zweiten zwischen den Frontwänden eingefalteten Seitenfalte gefaltet wird, dass eine erste Seite der Beutelfolie eine Außenseite und eine zweite Seite der Beutelfolie eine Innenseite dessen Seitenfaltenschlauch bildet und dass Ränder der Bahn an einer ersten Seitenfaltenschlauchecke übereinander liegen und dort die erste Frontwand und die erste Seitenfalte zunächst unverbunden sind und drittens der Seitenfaltenschlauch an der ersten Seitenfaltenschlauchecke durch eine die Ränder verbindende Längssiegelnaht umfangseitig verschlossen und damit die erste Frontwand mit der ersten Seitenfalte verbunden wird, während an einer zweiten Seitenfaltenschlauchecke ein Übergang von der ersten Seitenfalte zu der zweiten Frontwand in Form einer Faltkante verbleibt.

Wie auch im Zusammenhang mit dem zuvor beschriebenen Seitenfaltenverpackungsbeutel selbst beschrieben, können bei dem erfindungsgemäßen Verfahren die Frontwände an dem Seitenfaltenschlauch mit einer unterschiedlichen Breite und/oder einem Versatz zueinander derart gebildet werden, dass die die erste Seitenfalte und die erste Frontwand verbindende Längssiegelnaht seitlich neben der zweiten Frontwand gebildet wird.

Alternativ ist es möglich, dass die zweite Seitenfaltenschlauchecke durch eine Umlenkung an einem die Längssiegelnaht erzeugenden Siegelwerkzeug vorbeigeführt wird. Der Seitenfaltenschlauch ist üblicherweise zunächst in seinem flachliegenden Zustand eben abgestützt. Um selektiv eine Versiegelung nur an der ersten Seitenfaltenschlauchecke und nicht an der zweiten Seitenfaltenschlauchecke zu erreichen, kann die zweite Seitenfaltenschlauchecke beispielsweise nach unten abgelenkt und so an dem Siegelwerkzeug vorbeigeführt werden, sodass dann das Siegelwerkzeug nicht mit der zweiten Seitenfaltenschlauchecke in Eingriff steht. Des Weiteren ist es auch möglich, die zweite Seitenfaltenschlauchecke temporär nach innen umzulegen, wobei jedoch üblicherweise die Erzeugung weiterer klar definierter Knicklinien vermieden werden soll.

Gemäß einer weiteren alternativen Ausgestaltung der Erfindung ist vorgesehen, dass bei dem Erzeugen der Längssiegelnaht die erste Seitenfaltenschlauchecke und die zweite Seitenfaltenschlauchecke übereinander liegen, wobei mit einem Siegelwerkzeug über eine Dicke dessen Seitenfaltenschlauchs ein Temperaturgradient erzeugt wird, welcher nur an der ersten Seitenfaltenschlauchecke eine dauerhafte Verbindung bewirkt.

Beispielsweise kann vorgesehen sein, dass das Siegelwerkzeug an der ersten Seitenfaltenschlauchecke eine beheizte Siegelbacke aufweist, wobei ein an der zweiten Seitenfaltenschlauchecke anliegendes Gegenelement des Siegelwerkzeugs nicht beheizt oder sogar gekühlt ist. Das Gegenelement kann beispielsweise eine Gummierung aufweisen oder aus Gummi gebildet sein. Dabei ist es auch möglich, dass das Gegenelement eine größere Breite als die beheizte Siegelbacke aufweist, um durch eine gleichmäßigere Temperatur- und/oder Kraftverteilung die Erzeugung einer dauerhaften Verbindung an der zweiten Seitenfaltenschlauchecke und insbesondere zwischen den Flügeln der ersten Seitenfalte entgegenzuwirken.

Vor diesem Hintergrund ist es auch möglich, dass nach dem Siegelwerkzeug ein Messer oder ein vergleichbares Trennelement in die erste Seitenfalte seitlich eingeführt wird, um gewisse Anhaftungen direkt wieder zu lösen.

Gerade wenn ein Temperaturgradient in der beschriebenen Weise erzeugt werden soll, kann im flachliegenden Zustand während des Heißsiegelns ein trennendes und/oder die Wärmeleitung beeinflussenden Material als Streifen oder Band in die entsprechende Seitenfalte eingelegt sein. Bei der Einstellung eines Temperaturgradienten derart, dass bei einem Übereinanderliegen der ersten Seitenfaltenschlauchecke und der zweiten Seitenfaltenschlauchecke nur an der ersten Seitenfaltenschlauchecke eine dauerhafte Verbindung gebildet wird, kann es zu einem unerwünschten Anhaften des Materials an der Außenseite der entsprechenden Seitenfalten kommen. Durch ein im Bereich des Siegelwerkzeugs eingeführtes Material kann ein solches Anhaften sicher verhindert werden. Beispielsweise kann ein in Bereich des Siegelwerkzeugs feststehender oder auch bereichsweise mitlaufender Streifen aus einem geeigneten Kunststoff wie exemplarisch Polytetrafluorethylen (PTFE) oder Blech vorgesehen sein.

Durch ein solches trennendes Material wird auch die Wärmeleitung beeinflusst, wobei das zusätzliche Material eine gewisse Isolierung bewirkt und während der Einwirkung des Siegelwerkzeuges auch durch eine Wärmekapazität einen Teil der Wärmeenergie aufnehmen kann.

Um einen gewissen Trenneffekt zu erreichen, kann zusätzlich oder alternativ auch eine trennende Beschichtung wie beispielsweise Anti-Siegellack an der Außenseite vorgesehen sein.

Die Erfindung wird nachfolgend anhand von lediglich exemplarischen Ausführungsbeispielen erläutert.

Es zeigen:
- Fig. 1A: einen Schnitt durch einen Seitenfaltenschlauch bei der Herstellung einer ersten Ausführungsform eines erfindungsgemäßen Seitenfaltenverpackungsbeutels,
- Fig. 1B: einen Schnitt durch den Seitenfaltenverpackungsbeutel gemäß der ersten Ausführungsform,
- Fig. 2: den Seitenfaltenverpackungsbeutel gemäß der ersten Ausführungsform in einer perspektivischen Ansicht,
- Fig. 3A und 3B: Ansichten gemäß der Fig. 1A und 1B für eine zweite Ausführungsform der Erfindung,
- Fig. 4A und 4B: Ansichten entsprechend der Fig. 1A und 1B für eine dritte Ausführungsform der Erfindung,
- Fig. 5A und 5B: Ansichten gemäß der Fig. 1A und 1B für eine vierte Ausführungsform der Erfindung,
- Fig. 6: eine Schnittdarstellung eines Seitenfaltenschlauches in einer weiteren Ausführungsform der Erfindung.

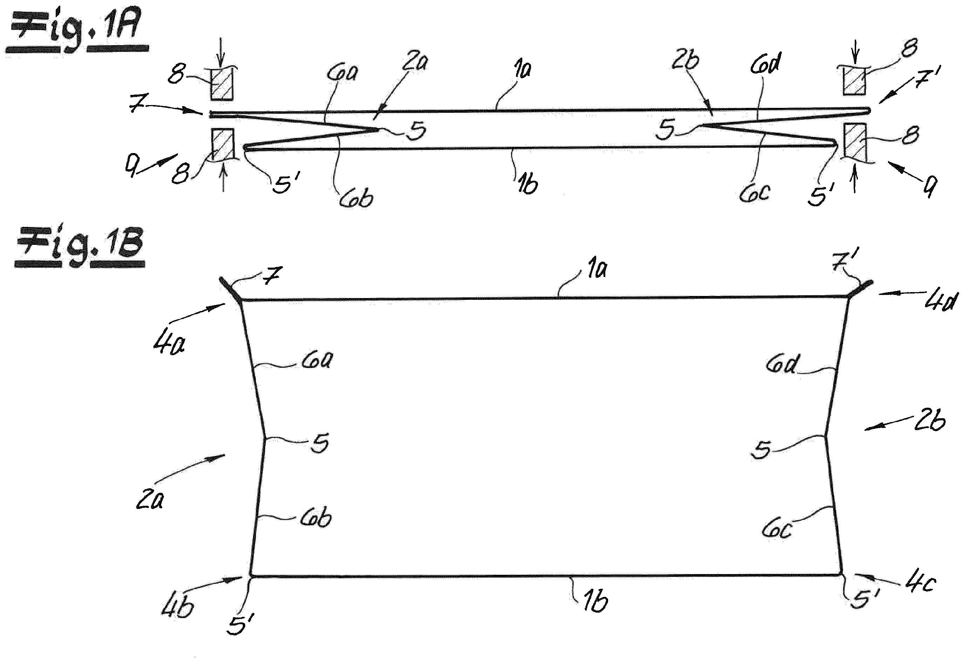

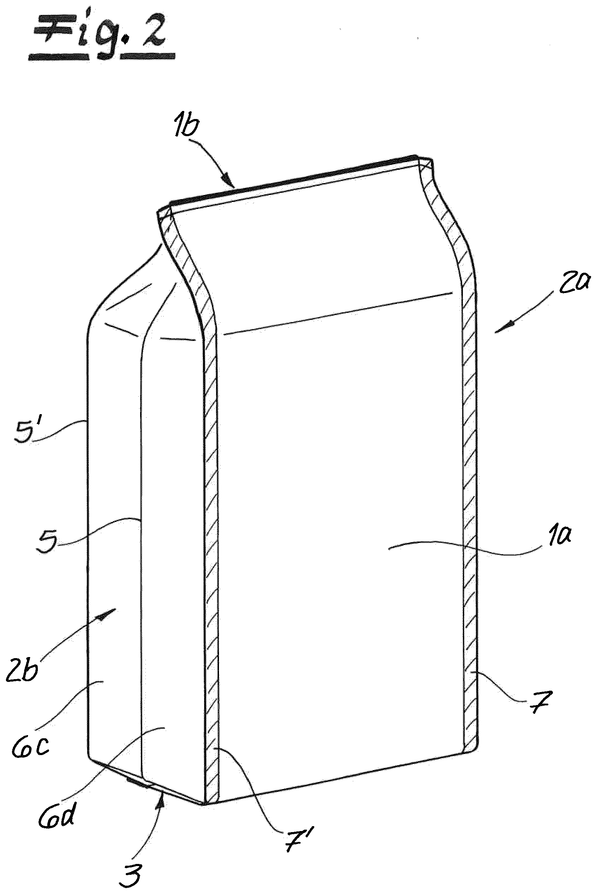

Die Fig. 1A zeigt in einer Schnittdarstellung einen Seitenfaltenschlauch zur Bildung eines Seitenfaltenverpackungsbeutels in einem flachliegenden Zustand. Ein Schnitt durch den geschlossenen Seitenfaltenverpackungsbeutel ist in der Fig. 1B dargestellt. Die Fig. 2 zeigt den Seitenfaltenverpackungsbeutel in einer perspektivischen Ansicht.

Der Seitenfaltenschlauch und der Seitenfaltenverpackungsbeutel weisen eine erste Frontwand 1a, eine zweite Frontwand 1b, eine erste Seitenfalte 2a und eine zweite Seitenfalte 2b auf, die bei dem Seitenfaltenverpackungsbeutel gemäß der Fig. 2 einen sowohl umfangseitig als auch an einem oberen Ende sowie an einem unteren Ende geschlossenen Beutelkörper bilden. Gemäß der Fig. 2 ist der Seitenfaltenverpackungsbeutel mit einem Standboden 3 gebildet.

Der Beutelkörper weist insgesamt vier Beutelecken 4a, 4b, 4c, 4d auf, wobei die Seitenfalten 2a, 2b jeweils eine Knicklinie 5 aufweisen. Die Knicklinien 5 stellen an der ersten Seitenfalte 2a einen Übergang von einem ersten Flügel 6a zu einem zweiten Flügel 6b und an der zweiten Seitenfalte 2b einen Übergang von einem dritten Flügel 6c zu einem vierten Flügel 6d dar. Die Zählung der Beutelecken 4a, 4b, 4c, 4d und der Flügel 6a, 6b, 6c, 6d erfolgt in dem dargestellten Ausführungsbeispiel exemplarisch und ohne Einschränkung entgegen dem Uhrzeigersinn.

Aus der Fig. 1A ist ersichtlich, dass die Frontwände 1a, 1b und die Seitenfalten 2a, 2b gemeinsam durch Falten und Siegeln einer Bahn der Beutelfolie gebildet sind.

Die Beutelfolie besteht sortenrein aus einem Polylolefin, insbesondere Polyethylen und ist durch Extrusion beispielsweise als Monofolie gebildet. Die Beutelfolie kann beispielsweise durch Extrudieren eines Blasfolienschlauchs und Verblocken des Blasfolienschlauchs gebildet sein. Die Beutelfolie weist also an ihren beiden Seiten das gleiche Material und auch gleiche Siegeleigenschaften auf.

Wenn also entgegen der Fig. 1A die erste Beutelecke 4a und die zweite Beutelecke 4b bei der Fertigung aus dem Seitenfaltenschlauch genau übereinander liegen, so würde üblicherweise auch der erste Flügel 6a und der zweite Flügel 6b in unerwünschter Weise bei einem üblichen Heißsiegeln miteinander verbunden werden.

Um dies zu vermeiden ist gemäß dem Ausführungsbeispiel der Fig. 1A vorgesehen, dass die erste Frontwand 1a eine größere Breite als die zweite Frontwand 1b aufweist. Die erste Frontwand 1a erstreckt sich also in Querrichtung über die zweite Frontwand 1b hinaus, wobei entsprechend auch der erste Flügel 6a und der vierte Flügel 6d breiter ausgeführt sind als der zweite und dritte Flügel 6b, 6c.

Im flachliegenden Zustand liegt also die erste Beutelecke 4a neben der zweiten Frontwand 1b, wobei der Überstand typischerweise zwischen 5 mm und 20 mm, insbesondere zwischen 7 mm und 15 mm beträgt. Durch den Überstand kann an der ersten Beutelecke 4a gemäß der Fig. 1A eine Längssiegelnaht 7 mit einem zwei beheizte Siegelbacken 8 aufweisenden Siegelwerkzeug 9 erzeugt werden, wobei die Siegelnaht 7 an der ersten Beutelecke 4a auch eine umfangseitige Verschlussnaht darstellt. Die zweite Frontwand 1b schließt dagegen an der zweiten Beutelecke 4b lediglich über eine Knicklinie 5' an den zweiten Flügel 6b an.

Auch an der dritten Beutelecke 4c ist lediglich eine Knicklinie 5' vorgesehen, während an der vierten Beutelecke 4d wahlweise lediglich eine Knicklinie 5` oder - wie dem Ausführungsbeispiel dargestellt - eine weitere Längssiegelnaht 7` vorgesehen sein kann. Die weitere Siegelnaht 7` kann aus Stabilitätsgründen sowie aus optischen Gründen zweckmäßig sein.

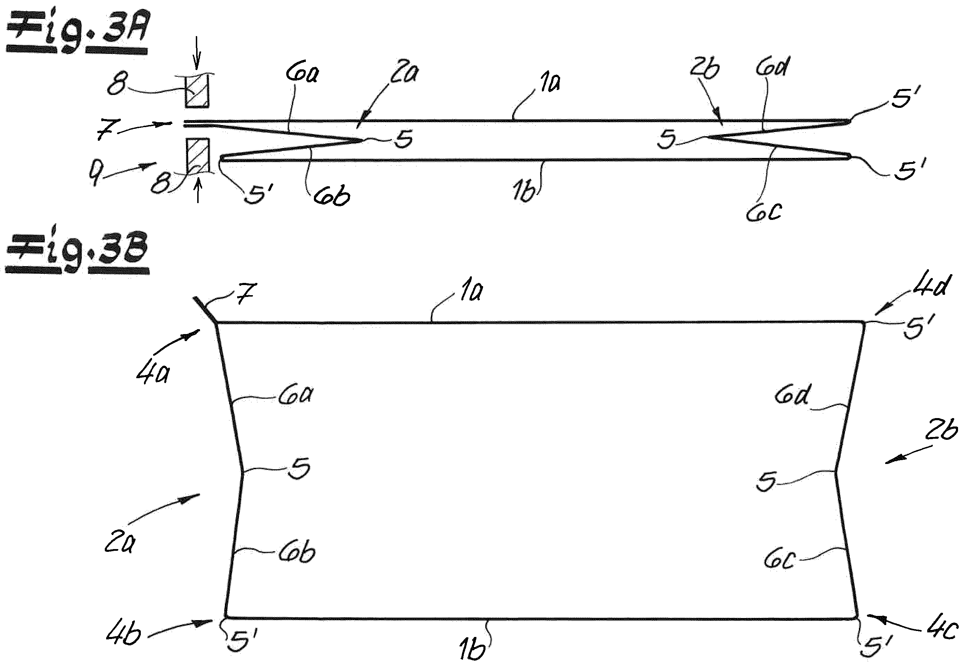

Die Fig. 3A und 3B zeigen entsprechend der Fig. 1A und 1B eine zweite Ausführungsform der Erfindung, wobei die erste Frontwand 1a wiederum breiter als die zweite Frontwand 1b ist, jedoch lediglich an der ersten Beutelecke 4a gegenüber der zweiten Frontwand 1b vorsteht. Entsprechend wird lediglich an der ersten Beutelecke 4a die Längssiegelnaht gebildet, während an den übrigen Beutelecken 4b, 4c, 4d lediglich Knicklinien 5' vorgesehen sind.

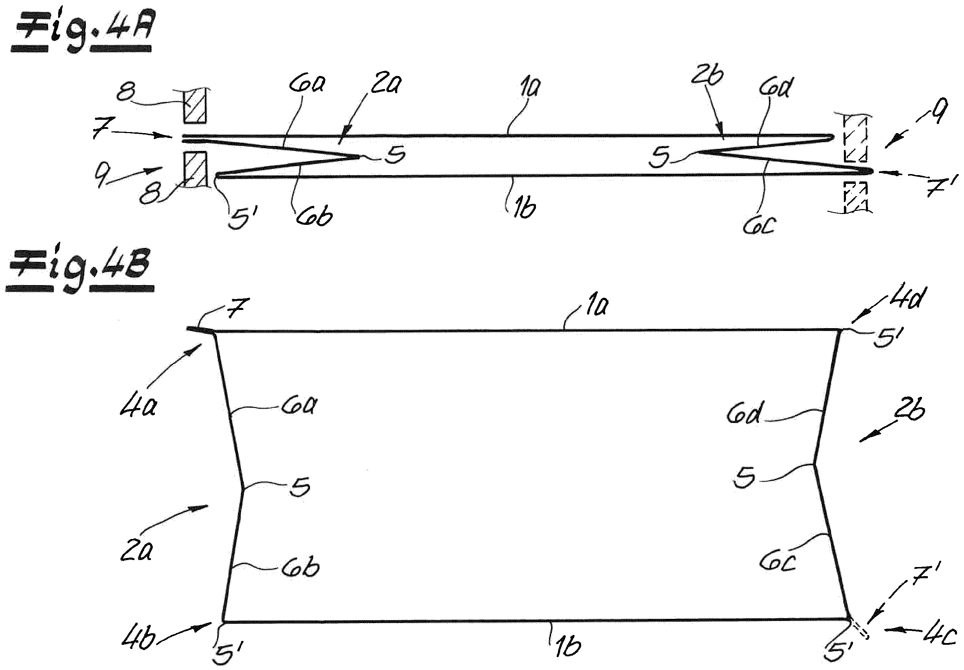

Die Fig. 4A und 4B betreffen eine dritte Ausdrucksform der Erfindung, bei der die Frontwände 1a, 1b eine gleiche Breite aufweisen, bei dem Seitenfaltenschlauch jedoch versetzt zueinander angeordnet sind. Dies wird dadurch erreicht, dass der erste Flügel 6a und der dritte Flügel 6c eine größere Breite aufweisen als der zweite und vierte Flügel 6b, 6d. Durch die versetzte Anordnung ergibt sich wie bei den zuvor beschriebenen Ausgestaltungen an der ersten Beutelecke 4a ein Versatz, sodass dort die Längssiegelnaht 7 in Form einer Verschlussnaht gebildet werden kann.

An der dritten Beutelecke 4c kann wahlweise lediglich eine Knicklinie 5' oder eine Längssiegelnaht 7' vorgesehen sein. Diese Längssiegelnaht 7' sowie ein entsprechendes Siegelwerkzeug sind entsprechend in den Fig. 4A und 4B gestrichelt dargestellt.

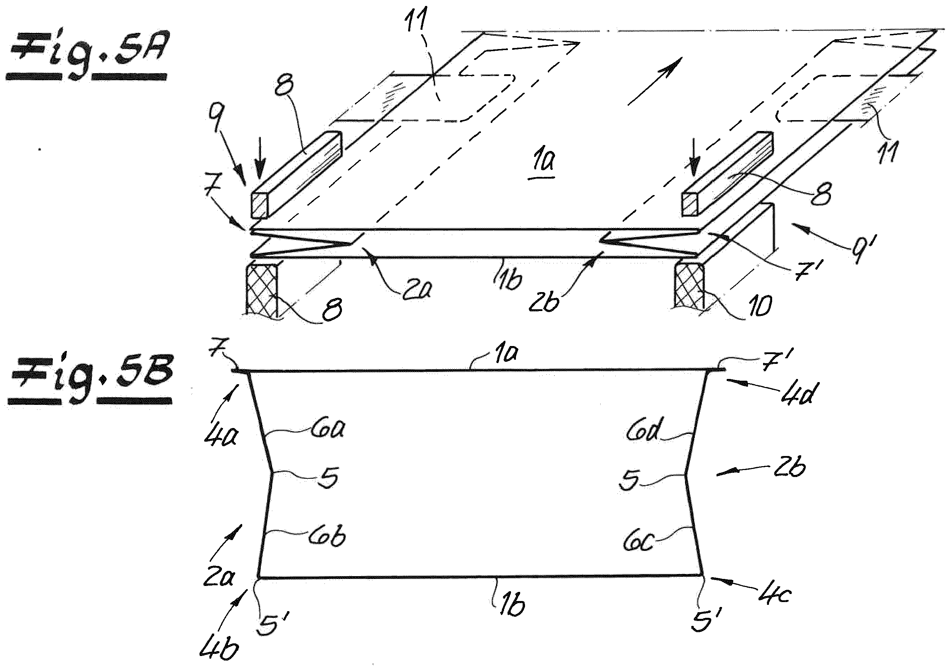

Die Fig. 5A und 5B betreffen eine vierte Ausführungsform der Erfindung, bei der an der ersten Seitenfalte 2a die erste Beutelecke 4a und die zweite Beutelecke 4b sowie an der zweiten Seitenfalte 2b die dritte Beutelecke 4c und die vierte Beutelecke 4d genau übereinander liegen und entsprechend auch die Frontwände 1a, 1b eine gleiche Breite aufweisen und ohne einen Versatz angeordnet sind.

Um dennoch ausschließlich an der ersten Beutelecke 4a und der vierten Beutelecke 4d Längssiegelnähte 7, 7' zu erzeugen, sind modifizierte Siegelwerkzeuge 9' vorgesehen. Die Siegelwerkzeuge 9' weisen jeweils nur eine beheizte Siegelbacke 8 auf, wobei ein unbeheiztes, gummiertes Gegenelement 10 vorgesehen ist, welches gegenüber der beheizten Siegelbacke 8 auch eine größere Breite aufweist. Mit dem modifizierten Siegelwerkzeug 9' wird über die Dicke des Seitenfaltenschlauchs ein Temperaturgradient erzeugt, welcher bei einer geeigneten Temperaturwahl bzw. Temperatursteuerung nur an der ersten Beutelecke 4a bzw. Seitenfaltenschlauchecke und respektive der vierten Beutelecke 4d eine dauerhafte Verbindung bewirkt, während an der zweiten Beutelecke 4b und der dritten Beutelecke 4d übliche Knicklinien 5' verbleiben. Insbesondere wird der Temperaturgradient auch so eingestellt und beibehalten, dass an den beiden Seitenfalten 2a, 2b auch die jeweiligen Flügel 6a, 6b, 6c, 6d nicht miteinander dauerhaft verbunden werden.

In diesem Zusammenhang zeigt die Fig. 5A auch, dass hinter dem modifizierten Siegelwerkzeug 9` auch ein Trennelement 11 in die Seitenfalten 2a, 2b eingeführt werden kann, um gewisse Anhaftungen sofort zu lösen.

Es versteht sich, dass bei der Fig. 5a auch lediglich nur an der ersten Beutelecke 4a die dort auch für einen umfangseitigen Verschluss notwendige Längssiegelnaht 7 mit einem einzigen modifizierten Siegelwerkzeug 9' erzeugt werden kann.

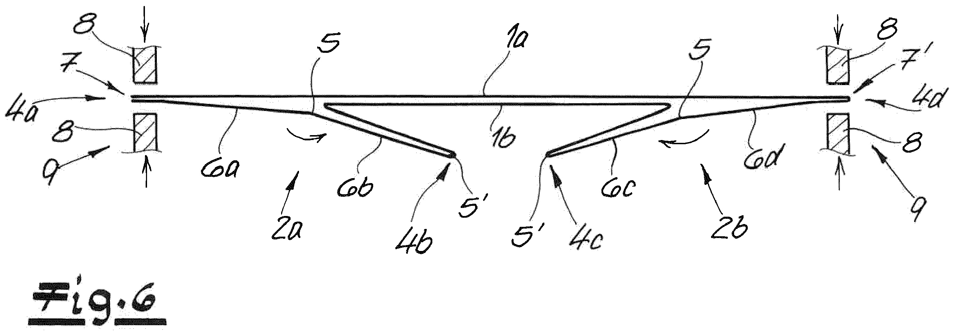

Die Fig. 6 zeigt eine weitere Ausführungsform der Erfindung, bei der während des Herstellungsverfahrens die zweite Seitenfaltenschlauchecke durch eine Umlenkung an einem die Längssiegelnaht erzeugenden Siegelwerkzeug 9 mit beheizten Siegelbacken 8 vorbeigeführt wird. Hierzu kann die zweite Seitenfaltenschlauchecke temporär nach innen gefaltet sein. Das Gleiche gilt für die dritte Seitenfaltenschlauchecke, wenn auch an der gegenüberliegenden Seite der ersten Frontwand 1a eine zusätzliche Längssiegelnaht 7' erzeugt werden soll.

## Patentansprüche

1. Seitenfaltenverpackungsbeutel mit einem von einer ersten Frontwand (1a), einer zweiten Frontwand (1b), einer ersten Seitenfalte (2a) und einer zweiten Seitenfalte (2b) gebildeten Beutelkörper aus einer Beutelfolie, wobei die erste Seitenfalte (2a) an einer ersten Beutelecke (4a) mit einem ersten Flügel (6a) an die erste Frontwand (1a) und an einer zweiten Beutelecke (4b) mit einem zweiten Flügel (6b) an die zweite Frontwand (1b) anschließt, wobei die zweite Seitenfalte (2b) an einer dritten Beutelecke (4c) mit einem dritten Flügel (6c) an die zweite Frontwand (1b) und an einer vierten Beutelecke (4d) mit einem vierten Flügel (6d) an die erste Frontwand (1a) anschließt und wobei die erste Frontwand (1a) und der erste Flügel (6a) an der ersten Beutelecke (4a) über eine Längssiegelnaht (7) in Form einer Verschlussnaht miteinander verbunden sind, **dadurch gekennzeichnet, dass** die zweite Frontwand (1b) an der zweiten Beutelecke (4b) lediglich über eine Knicklinie (5`) an den zweiten Flügel (6b) anschließt.

2. Seitenfaltenverpackungsbeutel nach Anspruch 1, **dadurch gekennzeichnet, dass** die Beutelfolie sortenrein aus einem Polyolefin besteht.

3. Seitenfaltenverpackungsbeutel nach Anspruch 1 oder 2, **dadurch gekennzeichnet, dass** die Beutelfolie an einer ersten Seite, welche eine Außenseite des Beutelkörpers bildet, und an einer zweiten Seite, welche eine Innenseite des Beutelkörpers bildet, aus dem gleichen Polymer gebildet ist und gleiche Siegeleigenschaften aufweist.

4. Seitenfaltenverpackungsbeutel nach Anspruch 3, **dadurch gekennzeichnet, dass** das die erste Seite und die zweite Seite durch Extrusion materialeinheitlich gebildet sind.

5. Seitenfaltenverpackungsbeutel nach Anspruch 4, **dadurch gekennzeichnet, dass** die Beutelfolie eine Monofolie ist.

6. Seitenfaltenverpackungsbeutel nach einem der Ansprüche 1 bis 5, **dadurch gekennzeichnet, dass** die Beutelfolie eine Extrusionsfolie ist.

7. Seitenfaltenverpackungsbeutel nach einem der Ansprüche 1 bis 6, **dadurch gekennzeichnet, dass** die Frontwände (1a, 1b) und die Seitenfalten (2a, 2b) gemeinsam durch Falten und Siegel einer Bahn der Beutelfolie gebildet sind.

8. Seitenfaltenverpackungsbeutel nach einem der Ansprüche 1 bis 7, **dadurch gekennzeichnet, dass** in einem flachliegenden Zustand mit zwischen den Frontwänden (1a, 1b) eingefalteten Seitenfalten (2a, 2b) die Längssiegelnaht (7) an der ersten Beutelecke (4a) neben der zweiten Frontwand (1b) angeordnet ist.

9. Seitenfaltenverpackungsbeutel nach einem der Ansprüche 1 bis 8, **dadurch gekennzeichnet, dass** die erste Frontwand (1a) eine größere Breite als die zweite Frontwand (1b) aufweist.

10. Seitenfaltenverpackungsbeutel nach einem der Ansprüche 1 bis 9, **dadurch gekennzeichnet, dass** die erste Frontwand (1a) an der vierten Beutelecke (4d) über eine Längssiegelnaht (7`) an den vierten Flügel (6d) anschließt

11. Seitenfaltenverpackungsbeutel nach einem der Ansprüche 1 bis 10, **dadurch gekennzeichnet, dass** die zweite Frontwand (1b) an der dritten Beutelecke (4c) lediglich über eine Knicklinie (5`) an den dritten Flügel (6c) anschließt.

12. Seitenfaltenverpackungsbeutel nach einem der Ansprüche 1 bis 8, **dadurch gekennzeichnet, dass** der erste Flügel (6a) und der dritte Flügel (6c) eine größere Breite als des zweite Flügel (6b) und der vierte Flügel (6d) aufweisen.

13. Seitenfaltenverpackungsbeutel nach einem der Ansprüche 1 bis 12, **dadurch gekennzeichnet, dass** der Beutelkörper mit einer abwaschbaren Druckfarbe bedruckt ist

14. Verfahren zur Herstellung eines Seitenfaltenverpackungsbeutels nach einem der Ansprüche 1 bis 13, wobei nacheinander
- eine Beutelfolie sortenrein in einem Extrusionsprozess gebildet wird,
- eine Bahn der Beutelfolie derart zu einem Seitenfaltenschlauch mit einer ersten Frontwand (1a), einer zweiten Frontwand (1b), einer ersten zwischen den Frontwänden (1a, 1b) eingefalteten Seitenfalte (2a) und einer zweiten zwischen den Frontwänden (1a, 1b) eingefalteten Seitenfalte (2b) gefaltet wird, dass eine erste Seite der Beutelfolie eine Außenseite und eine zweite Seite der Beutelfolie eine Innenseite des Seitenfaltenschlauchs bilden und dass Ränder der Bahn an einer ersten Seitenfaltenschlauchecke übereinander liegen und dort die erste Frontwand (1a) und die erste Seitenfalte (2a) zunächst unverbunden sind und
- der Seitenfaltenschlauch an der ersten Seitenfaltenschlauchecke durch eine die Ränder verbindende Längssiegelnaht (7) umfangseitig verschlossen und damit die erste Frontwand (1a) mit der ersten Seitenfalte (2a) verbunden wird, während an einer zweiten Seitenfaltenschlauchecke ein Übergang von der ersten Seitenfalte (2a) zur der zweiten Frontwand (1b) in Form einer Faltkante verbleibt

15. Verfahren nach Anspruch 14, wobei die Frontwände (1a, 1b) an dem Seitenfaltenschlauch mit einer unterschiedlichen Breite und/oder einem Versatz zueinander derart gebildet werden, dass die die erste Seitenfalte (2a) und die erste Frontwand (1a) verbindende Längssiegelnaht (7) seitlich eben der zweiten Frontwand (1b) gebildet wird.

16. Verfahren nach Anspruch 14, wobei die zweite Seitenfaltenschlauchecke durch eine Umlenkung an einem die Längssiegelnaht (7) erzeugenden Siegelwerkzeug (9) vorbeigeführt wird.

17. Verfahren nach Anspruch 14, **dadurch gekennzeichnet, dass** bei dem Erzeugen der Längssiegelnaht (7) die erste Seitenfaltenschlauchecke und die zweite Seitenfaltenschlauchecke übereinander liegen, wobei mit einem Siegelwerkzeug (9') über eine Dicke der Seitenfaltenschlauches ein Temperaturgradient erzeugt wird, welcher nur an der ersten Seitenfaltenschlauchecke ein dauerhafte Verbindung bewirkt.

18. Verfahren nach einem der Ansprüche 14 bis 17, wobei die Beutelfolie durch extrudieren eines Blasfolienschlauch und verblocken der Blasfolienschlauchs gebildet wird.
